# DEMANDE DE BREVET EUROPEEN

(11) **EP 0 807 506 A1**
(43) Date de publication de la demande: **19.11.1997**
(21) Numéro de dépôt: 97390004.6
(22) Date de dépôt: 15.05.1997
(51) Int. Cl.: B29C 45/14

(54) **Procédé de protection de tuyauteries dans le domaine automobile, et moule pour la mise en oeuvre de ce procédé**

(30) Priorité: 15.05.1996 FR 9606372
(71) Demandeur: ROBOLIX S.A., F-32430 Cologne (FR)
(72) Inventeur: Jaubert, Philippe, 32430 Cologne (FR)
(74) Mandataire: Cabinet BARRE LAFORGUE & associés

(57) **Abrégé**

L'invention concerne un procédé de protection partielle ou totale de tuyauteries du type automobile, réalisées à partir de tubes, contre les projections mécaniques et/ou chimiques, consistant à utiliser un moule (1, 2) comportant une chambre cylindrique (3) d'un diamètre supérieur au diamètre du tube et dont les deux extrémités (4) présentent un diamètre identique à celui dudit tube, à disposer la portion de longueur à protéger du tube dans la chambre (3) du moule (1, 2), de façon que ledit tube obture les extrémités de ladite chambre, et à injecter en basse pression une matière apte à remplir la chambre, à adhérer au tube et à demeurer souple.

## Description

L'invention vise un procédé de protection contre des projections, notamment mécaniques et chimiques, de tubes rigides utilisés dans le secteur automobile (tubes de frein, tubes hydrauliques, conduites diverses, etc...), et destinés à être cintrés après protection. L'invention s'étend également à un moule pour la mise en oeuvre de ce procédé.

Les tubes utilisés dans le secteur automobile sont classiquement recouverts, avant cintrage, partiellement sur certaines portions, ou totalement, par une gaine souple afin de les protéger mécaniquement (projection de gravillons, passage de cloisons...) et chimiquement (projection d'huile de freinage...). Il est à noter, en outre, que ces tubes reçoivent généralement auparavant une protection chimique contre la corrosion.

Le procédé actuel de fabrication est le suivant :
- découpe de la gaine à la longueur désirée sur une machine spécifique (la gaine utilisée est généralement thermorétractable, et est habituellement fournie en bobine),
- mise en place de la gaine sur le tube droit, opération actuellement réalisée manuellement sur le tube coupé à la longueur.

Ensuite, les tubes sont équipés de raccords et leurs deux extrémités sont formées (en manuel ou sur des machines automatiques).

Enfin, le tube est introduit, après vérification du positionnement de la gaine, dans une enceinte chauffante en vue d'engendrer la rétraction de ladite gaine thermorétractable, puis refroidi pour permettre sa manutention en vue du cintrage.

L'inconvénient majeur de ce procédé réside dans le fait que l'ensemble de l'opération est onéreux tant par le coût de la matière que par le coût de la main - d'oeuvre, que par le coût des investissements.

En effet, et en premier lieu, le coût de revient de la gaine utilisée est relativement important, résultant notamment du fait que l'épaisseur de cette gaine doit être suffisante pour résister aux efforts dus à la rétraction. De plus, lors de chaque opération de gainage, ce procédé impose généralement la mise en place d'une surlongueur de gaine de l'ordre du centimètre en vue de remédier aux éventuelles erreurs de positionnement manuel.

De plus, la décomposition des opérations engendre un coût de main-d'oeuvre élevé résultant des nombreuses manipulations à effectuer, et conduit à un encours de production très long qui entraîne un manque de souplesse dans l'atelier de production.

Enfin, un tel procédé, du fait des nombreuses opérations à effectuer, nécessite également un investissement en matériel très important.

Un autre inconvénient de ce procédé résulte que, du fait des variations de rétraction de la gaine, la section de cette dernière s'avère souvent être non circulaire et non constante. Or, ces variations de forme et de diamètre peuvent engendrer des difficultés lors du cintrage ultérieur du tube.

Malgré ces inconvénients majeurs, ce procédé s'avère toutefois la technique communément mise en oeuvre depuis plus de quinze ans dans le domaine de la protection des tubes dans le secteur automobile.

La seule solution actuelle visant à se substituer à la technique ci-dessus décrite a consisté à utiliser un tube métallique recouvert en continu par coextrusion d'un revêtement souple.

Toutefois, ce procédé impose également des investissements lourds et présente comme autres inconvénients les points suivants :
- mauvaise adhérence du revêtement sur le tube métallique,
- couverture complète du tube entraînant un coût matière élevé,
- obligation de décaper les extrémités pour le formage des extrémités et la mise en place des raccords.

La présente invention vise à pallier l'ensemble des inconvénients précités des techniques actuelles de protection de tubes rigides dans le domaine automobile, et se propose de fournir un procédé de protection de mise en oeuvre très simple conduisant à une réduction notable du prix de revient de ces opérations de protection.

A cet effet, l'invention vise un procédé de protection partielle ou totale de tuyauteries du type automobile, réalisées à partir de tubes rigides, contre les projections mécaniques et/ou chimiques, consistant :
- à utiliser un moule comportant une chambre cylindrique d'un diamètre supérieur au diamètre du tube et dont les deux extrémités présentent un diamètre identique à celui dudit tube, la longueur de ladite chambre étant inférieure à la longueur du tube, et équivalent à la longueur à protéger dudit tube,
- à disposer la portion de longueur à protéger du tube dans la chambre du moule de façon que ce dernier obture les extrémités de ladite chambre,
- et à injecter en basse pression une matière apte à remplir la chambre, à adhérer au tube et à demeurer souple.

Un tel procédé présente l'avantage de pouvoir être mis en oeuvre facilement au moyen d'outillages et de moules simples et peu onéreux, et de permettre de réaliser, en une seule opération, une gaine de protection souple adhérant au tube et autorisant le cintrage du tube ainsi gainé.

De plus, tenant compte du support rigide que représente le tube, le temps de cycle de moulage peut être très court et inférieur à quinze secondes.

En outre, ce moulage peut être réalisé avant ou après le traitement des extrémités. Dans ce dernier cas, les manutentions du tube sont limitées, et ce d'autant plus, que le moulage peut être fait directement sur la machine utilisée pour traiter les extrémités dudit tube.

Ce procédé permet en outre de faire varier, en changeant de moule, aussi bien la longueur de la protection que son épaisseur, et également de maîtriser la position de la protection.

Par ailleurs, ce procédé permet d'obtenir une gaine de section circulaire très précise et constante autorisant un cintrage aisé du tube gainé.

Il est à noter que les brevets DE-34 00745, JP-62 064 519 et JP-59 070 527 décrivent des techniques de moulage visant à former par injection d'une matière thermofusible un manchon rigide autour de tubes de forage (DE-34 00745), ou de câbles souples (JP-62 064 519 et JP-59 070 527).

Toutefois, de telles techniques ne sauraient être d'aucun enseignement pour solutionner le problème technique à la base de l'invention, car elles visent à réaliser des manchons rigides à base, soit de polypropylène, soit de résine synthétique rigide, autour de tubes de forage ou de câbles souples consistant en des articles finis, c'est-à-dire non destinés à subir des transformations ultérieures.

Au contraire, le problème technique résolu par l'invention a consisté à concevoir un procédé peu onéreux relativement aux techniques utilisées depuis de longues années, permettant de protéger un tube rigide au moyen d'une gaine souple autorisant des opérations de cintrage ultérieur de ce tube, et assurant, du fait de sa souplesse, une protection contre les projections mécaniques et chimiques.

Selon un mode de mise en oeuvre préférentiel, on injecte une matière thermofusible telle que, notamment, une résine à base de polyamide.

A titre d'exemple, cette résine peut être du type de celle commercialisée par la Société HENKEL sous la référence MACROMELT 6790 S, ou celle commercialisée par la Société T R L sous la référence 96029.

Ce type de matière présente l'avantage d'avoir un coefficient d'allongement important lui conférant une grande souplesse et une aptitude à être cintré. De plus, de telles matières résistent aux agressions par les huiles de freinage et aux projections d'essence. Elles sont, en outre, très souples et résistent au grenaillage, c'est-à-dire au test représentatif de la tenue aux projections de gravillons.

De plus, on injecte préférentiellement la matière thermofusible à une température inférieure à 200°, conduisant à une mise en oeuvre simple, et notamment à une injection à une pression faible, et à un refroidissement rapide.

La matière injectée peut ainsi être avantageusement injectée à une pression inférieure à 50 bars qui autorise la réalisation de gaines de grandes longueurs (de plusieurs dizaines de centimètres), et de faible épaisseur (de l'ordre du millimètre).

Selon un mode de mise en oeuvre préférentiel, on utilise un moule doté d'au moins une empreinte radiale débouchant dans la chambre cylindrique, de forme adaptée pour permettre de former lors du remplissage de ladite chambre, un élément radial souple d'accrochage à une structure d'automobile.

Tel qu'on le comprendra mieux plus loin, l'utilisation d'un tel moule permet de réaliser une gaine de protection intégrant directement lors du moulage un élément radial souple de toute forme connue en soi permettant d'accrocher la tuyauterie finie à une structure d'automobile.

Le procédé selon l'invention peut, par ailleurs, être utilisé pour la protection de deux tuyauteries rigides reliées entre elles par une tuyauterie flexible maintenue sur lesdites tuyauteries rigides par des dispositifs de serrage. Dans ce cas :
- on utilise un moule dont la chambre présente un diamètre supérieur au diamètre de la tuyauterie flexible, et des extrémités de même diamètre que celui des tuyauteries rigides, ladite chambre présentant une longueur supérieure à celle de la tuyauterie flexible,
- on dispose la tuyauterie flexible dans la chambre du moule et on injecte en basse pression la matière.

L'invention s'étend à un moule comprenant :
- une chambre cylindrique dotée d'extrémités de diamètre inférieur au diamètre de la section courante,
- au moins un conduit d'injection débouchant dans la chambre.

Selon une autre caractéristique de l'invention, la chambre cylindrique comporte des extrémités de forme tronconique décroissante. Ainsi, les extrémités de la gaine souple de protection présentent un profil de forme décroissante obtenu grâce à la forme des extrémités de la chambre d'injection, qui confère à la protection obtenue un excellent degré de finition et supprime tout risque d'accrochage et de détérioration de cette protection.

Ce moule est, en outre, constitué préférentiellement d'au moins deux parties dotées de plans de joints passant par l'axe de la chambre.

De plus, chaque conduit d'injection est avantageusement ménagé au droit d'un plan de joint de deux parties dudit moule, de façon à permettre de casser la carotte d'injection lors de l'ouverture du moule.

En outre, chaque conduit d'injection est préférentiellement ménagé de façon à déboucher au droit d'une extrémité de forme décroissante de la chambre cylindrique.

Ce positionnement de chaque conduit d'injection conduit à obtenir une carotte d'injection au niveau de l'extrémité de forme décroissante de la gaine, et donc de réaliser une gaine de diamètre constant et de constitution homogène sur l'intégralité de sa longueur, hormis au droit de ses extrémités, non susceptible d'engendrer d'éventuelles difficultés lors du cintrage ultérieur du tube.

Selon une autre caractéristique de l'invention, le moule comporte au moins une empreinte radiale débouchant dans la chambre cylindrique, de forme conjuguée d'un élément d'accrochage à une structure d'automobile.

D'autres caractéristiques, buts et avantages de l'invention ressortiront de la description détaillée qui suit en référence aux dessins annexés qui en représentent à titre d'exemples non limitatifs, deux modes de réalisation préférentiels.

Sur ces dessins qui font partie intégrante de la présente description :
- la figure 1 est une vue en perspective schématique d'un moule conforme à l'invention constitué de deux parties mobiles,
- les figures 2 à 6 représentent les différentes étapes de mise en oeuvre d'un procédé conforme à l'invention pour la protection d'une tuyauterie réalisée à partir d'un tube,
- la figure 7 est une coupe longitudinale par un plan axial d'une première variante de moule conforme à l'invention destiné à la réalisation d'une gaine dotée d'un élément d'accrochage à une structure automobile,
- la figure 8 est une vue schématique partielle d'une tuyauterie revêtue d'une gaine réalisée à partir du moule de la figure 7, représentée accrochée à une structure d'automobile,
- la figure 9 est une coupe longitudinale par un plan axial d'une deuxième variante de moule conforme à l'invention, destiné à la réalisation d'une gaine dotée d'un élément d'accrochage à une cloison de structure automobile,
- la figure 10 est une vue schématique partielle d'une tuyauterie revêtue d'une gaine réalisée à partir du moule de la figure 9, représentée s'étendant au travers d'une cloison de structure automobile,
- les figures 11 et 12 représentent deux tuyauteries rigides reliées par une tuyauterie flexible respectivement avant et après la mise en oeuvre du procédé conforme à l'invention.

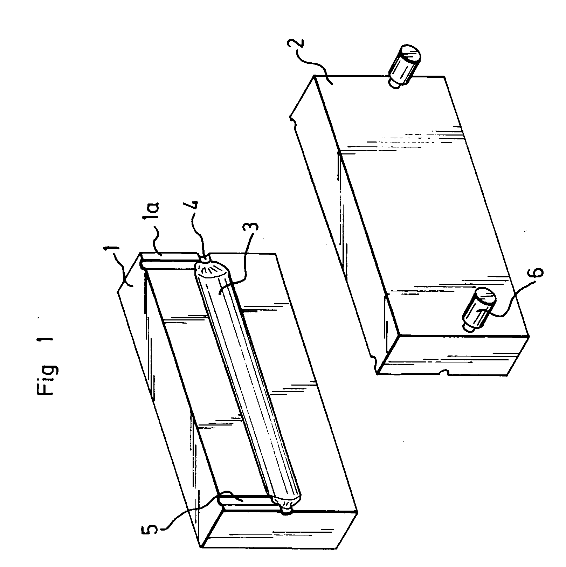

Le moule représenté à titre d'exemple à la figure 1 se compose de deux parties symétriques 1 et 2, de forme parallélépipèdique rectangle, réalisées en un matériau tel que de l'aluminium. Chacune de ces parties 1 et 2 présente une face de jonction telle la dotée d'une empreinte longitudinale 3 de section semi-cylindrique.

De plus, chacune de ces empreintes 3 présente une section conique décroissante au droit de chacune de ses extrémités, de façon à présenter une section semi-circulaire 4 de diamètre inférieur à sa section courante au niveau des faces d'extrémités des parties 1 et 2 du moule.

La forme de ces empreintes est adaptée, d'une part, pour que la chambre d'injection obtenue lors de la jonction des parties 1 et 2 du moule présente un diamètre supérieur à celui du tube à protéger, et d'autre part, pour que la section des extrémités 4 de cette chambre soit identique à celle dudit tube.

Chaque face de jonction 1a est dotée d'au moins une rainure 5, de section semi-cylindrique, en l'exemple au nombre de deux, ménagée entre une des faces latérales longitudinales des parties 1, 2 de moule et une extrémité de l'empreinte longitudinale 3.

Ces rainures 5 sont adaptées pour former, lors de la jonction des parties 1, 2 de moule, des conduits d'injection permettant un bon remplissage de la chambre d'injection.

De plus, il est à noter que du fait du positionnement des conduits d'injection au droit des faces de jonction la des parties de moule 1, 2, la carotte subsistant dans ces conduits, après injection, peut être facilement cassée par tout moyen connu en soi tel qu'un vérin schématisé en 6, intégré dans une partie 1 ou 2 de moule et débouchant dans une rainure 5.

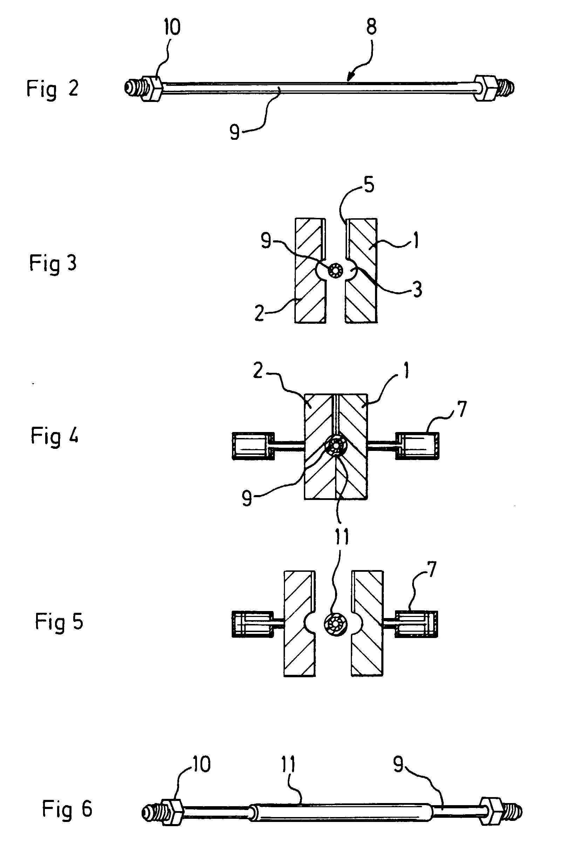

En dernier lieu, le moule comprend des moyens de déplacement relatif des parties 1, 2 de moule schématisés en 7 aux figures 4 et 5 et consistant de façon classique en des vérins hydrauliques ou pneumatiques.

La figure 2 représente une tuyauterie 8 destinée à être protégée, avant cintrage, selon le procédé conforme à l'invention, et comportant un tube 9 dont les extrémités sont équipées de raccords tels que 10 et façonnées.

Tel que représenté à la figure 3, la partie à protéger du tube 9 est disposée entre les parties 1, 2 de moule, dans la position ouverte de ce moule, de façon après fermeture dudit moule, à obturer les extrémités de la chambre d'éjection.

Tel que représenté à la figure 4, la protection 11 est réalisée par injection à basse pression d'une matière apte à adhérer sur le tube 9 et à former une gaine souple, telle que par exemple une résine thermofusible à base de polyamide injectée à une température de l'ordre de 140° C à 150° C, et à une pression de l'ordre de 40 bars.

Ce procédé permet d'obtenir de façon rapide et aisée, et en un temps très court, une protection, représentée à la figure 6, dont la position est parfaitement maîtrisée et dont la section externe est très précise.

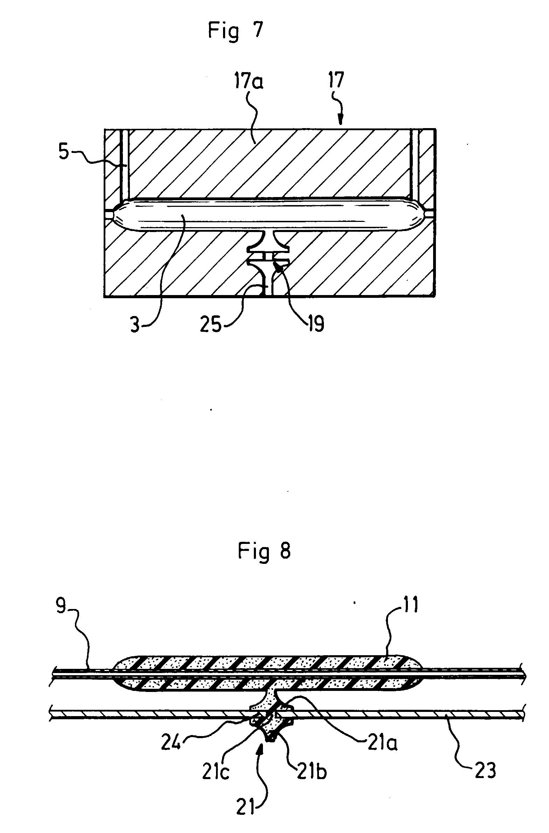

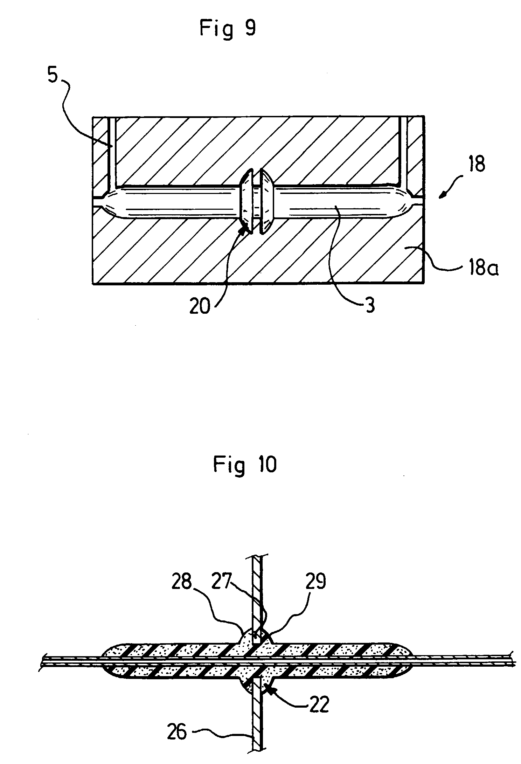

Les figures 7 et 9 représentent deux variantes de moules conformes à l'invention, identiques dans leur conception au moule ci-dessus décrit, et dont les éléments similaires ne seront donc pas décrits à nouveau en détail.

Ces moules se différencient en ce que les faces de jonction respectives 17a, 18a de chaque partie 17, 18 de moule présentent en regard des empreintes radiales respectivement 19, 20 de formes conjuguées, débouchant dans la chambre d'injection 3 et destinées à permettre de former lors du remplissage de ladite chambre, un élément radial souple, respectivement 21, 22 d'accrochage à une structure d'automobile.

En premier lieu, les empreintes 19 du moule 17 représenté à la figure 7 permettent de réaliser un élément d'accrochage souple tubulaire 21 s'étendant radialement par rapport à la gaine 11 et particulièrement destiné, tel que représenté à la figure 8, à venir s'encliqueter par déformation à l'intérieur d'un orifice ménagé dans un élément 23 de structure automobile.

De façon classique, un tel élément d'accrochage 21 comporte principalement deux tronçons 21a, 21b de forme tronconique disposés avec leur base en regard et reliés par un tronçon tubulaire 21c, adaptés pour délimiter une gorge annulaire 24 d'encliquetage.

Il est à noter, en outre, que selon cette première variante de réalisation, le moule 17 peut être doté d'un conduit d'injection 25 supplémentaire débouchant au niveau de l'empreinte 19 et destiné à assurer un bon remplissage de cette dernière.

Les empreintes 20 du moule 18 représenté à la figure 9 permettent quant à elles de réaliser un élément d'accrochage souple annulaire 22 s'étendant sur le pourtour de la gaine 11 et particulièrement destiné, tel que représenté à la figure 10, à permettre de solidariser la tuyauterie à une cloison 26, lors du passage de cette dernière.

A cet effet, cet élément d'accrochage 22 comporte une gorge externe annulaire 27 délimitée, de part et d'autre, par deux rampes obliques 28, 29 facilitant son introduction dans un orifice ménagé dans la cloison 26.

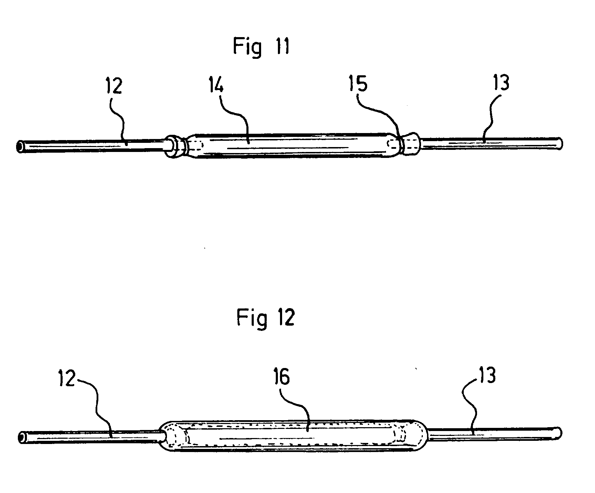

Les figures 11 et 12 représentent une autre application du procédé selon l'invention destinée à la protection de la jonction entre deux tuyauteries rigides 12, 13 reliées par une tuyauterie flexible 14 maintenue par des dispositifs de serrage 15. Dans ce cas, et tel que représenté à la figure 8, la gaine souple 16 est réalisée autour de la tuyauterie flexible 14 et vient se refermer autour des extrémités des tuyauteries rigides 12, 13.

En outre, en vue d'améliorer la jonction entre la protection 16 et les tuyauteries rigides 12, 13, la face externe des extrémités de ces dernières peut être préalablement déformée ou usinée de façon à obtenir une meilleure surface d'accrochage.

Il est à noter, enfin, que dans chacune des applications ci-dessus décrites, les extrémités de la gaine souple de protection 11, 16 présentent un profil de forme décroissante obtenu grâce à la forme des extrémités de la chambre d'injection, qui confère à la protection obtenue un excellent degré de finition et supprime tout risque d'accrochage et de détérioration de cette protection.

## Revendications

1. Procédé de protection partielle ou totale de tuyauteries du type automobile, réalisées à partie de tubes (9, 12, 13), contre les projections mécaniques et/ou chimiques, caractérisé en ce qu'il consiste :
- à utiliser un moule (1, 2) comportant une chambre cylindrique (3) d'un diamètre supérieur au diamètre du tube (9, 12, 13) et dont les deux extrémités (4) présentent un diamètre identique à celui dudit tube, la longueur de ladite chambre étant inférieure à la longueur du tube, et équivalente à la longueur à protéger de ce dit tube,
- à disposer la portion de longueur à protéger du tube (9, 12, 13) dans la chambre (3) du moule (1, 2), de façon que ledit tube obture les extrémités de ladite chambre,
- et à injecter en basse pression une matière apte à remplir la chambre, à adhérer au tube (9, 12, 13) et à demeurer souple.

2. Procédé selon la revendication 1, caractérisé en ce que l'on injecte une matière thermofusible.

3. Procédé selon la revendication 2, caractérisé en ce que l'on injecte une résine thermofusible à base de polyamide.

4. Procédé selon l'une des revendications 2 ou 3, caractérisé en ce que l'on injecte la matière thermofusible à une température inférieure à 200°.

5. Procédé selon l'une des revendications 1 à 4, caractérisé en ce que l'on injecte la matière thermofusible à une pression inférieure à 50 bars.

6. Procédé selon l'une des revendications précédentes, caractérisé en ce que l'on utilise un moule (17 ; 18) doté d'au moins une empreinte radiale (19 ; 20) débouchant dans la chambre cylindrique (3), de forme adaptée pour permettre de former lors du remplissage de ladite chambre, un élément radial souple (21 ; 22) d'accrochage à une structure d'automobile (23 ; 26).

7. Procédé selon l'une des revendications 1 à 6 pour la protection de deux tuyauteries rigides (12, 13) reliées entre elles par une tuyauterie flexible (14) maintenue sur lesdites tuyauteries rigides par des dispositifs de serrage (15), caractérisé en ce que :
- on utilise un moule (1, 2) dont la chambre présente un diamètre supérieur au diamètre de la tuyauterie flexible, et des extrémités de même diamètre que celui des tuyauteries rigides (12, 13), ladite chambre présentant une longueur supérieure à celle de la tuyauterie flexible (14),
- on dispose la tuyauterie flexible (14) dans la chambre (3) du moule (1, 2) et on injecte en basse pression la matière.

8. Moule destiné à la mise en oeuvre du procédé conforme à l'une des revendications 1 à 7, caractérisé en ce qu'il comprend :
- une chambre cylindrique (3) dotée d'extrémités (4) de diamètre inférieur au diamètre de la section courante de ladite chambre,
- au moins un conduit d'injection (5) débouchant dans la chambre (3).

9. Moule selon la revendication 8, caractérisé en ce que la chambre cylindrique (3) présente des extrémités (4) de forme tronconique décroissante.

10. Moule selon l'une des revendications 8 ou 9, caractérisé en ce qu'il est constitué d'au moins deux parties (1, 2) dotées de plans de joints (1a) passant par l'axe de la chambre (3).

11. Moule selon la revendication 10, caractérisé en ce que chaque conduit d'injection (5) est ménagé au droit d'un plan de joint de deux parties (1, 2) dudit moule, de façon à permettre de casser la carotte d'injection lors de l'ouverture du moule.

12. Moule selon les revendications 9 et 11 prises ensemble, caractérisé en ce chaque conduit d'injection (5) est ménagé de façon à déboucher au droit d'une extrémité (4) de forme décroissante de la chambre cylindrique (3)

13. Moule selon l'une des revendications 8 à 12, caractérisé en ce qu'il comporte au moins une empreinte radiale (19 ; 20) débouchant dans la chambre cylindrique (3), de forme conjuguée d'un élément d'accrochage (21 ; 22) à une structure (23 ; 26) d'automobile.
